# EUROPEAN PATENT APPLICATION

(11) **EP 1 333 693 A1**
(43) Date of publication of application: **06.08.2003**
(21) Application number: 02075486.7
(22) Date of filing: 04.02.2002
(51) Int. Cl.: H04Q 7/22

(54) **Method and system for transmitting messages to terminal groups**

(71) Applicant: Koninklijke KPN N.V., 9726 AE Groningen (NL)
(72) Inventor: Maatman, Sander Vayez, 2517 EZ Den Haag (NL); Kaspers, Sander, 7531 VG Enschede (NL); Valk, Gerrit Jan Edzard, 2594 ND Den Haag (NL); Mooy, Rutger Martijn, 2273 VK Voorburg (NL)
(74) Representative: Prins, Adrianus Willem

(57) **Abstract**

Method and system for transmitting e.g. SMS messages from individual user terminals (1) to terminal groups under control of a message server (3) having various network ports (x,y,z) and a group register (5) for registering, under control of a server processor (6), for each group of terminals a group identifier and the relevant terminal addresses and one of the server's network ports. The port is selectedthus that the combination of the terminal's network address and the server's network port is unique. On receiving a message from a calling terminal, the combination of the server port called by the terminal and the calling terminal's network address is matched with the combinations registered in the group register, resulting in one valid terminal group. Copies of the received message are transmitted to the network addresses of the matching SMS groups.

## Description

### Field of the Invention

The invention refers to a method and a system for transmitting messages from individual user terminals to groups of user terminals via a transmission network under control of a message server.

### Background of the Invention

Systems for broadcasting messages, e.g. of the SMS format which are very popular in the area of mobile telecommunication, are known from W09810608 and W09409599.

W09810608 discloses a system, comprising user stations each of which includes a recipient address storage, a recipient address group selector, and a tele-service signal sender for each member of the selected group of directory numbers automatically in a consecutive order, the group being selectable before a tele-service signal is sent and one of the tele-service signals being completed before a subsequent tele-service signal is automatically sent without requiring intervening user input after one tele-service signal is sent. An alphanumeric message, e.g. an SMS message, is sent in the tele-service signal. The group is selected from stored preset groups of recipient addresses, each group having an individual memory portion in the storage. A memory portion stores data for presenting a group identifier to a user of the mobile station, the group identifier being selected by the user to perform the group selection.
Disadvantageous is that for SMS group broadcasting the each user terminal need to have special storage and processing means which are not "standard" at this moment.

W09409599 discloses a method for transmitting short message in a cellular radio system. A short message being transmitted is first received by a mobile exchange of a cellular radio system. It is checked whether the received short message is to be delivered to one subscriber or to a group of several subscribers. The subscriber numbers of all the subscribers of the group are searched on the basis of a service identifier contained in the short message to be delivered to the group. The short message for each subscriber of the group is copied and sent to the subscribers. For each copied short message, a separate transmission process is initiated to forward the copied short message to the subscribers. Each separate transmission process performs various operations such as checking the home location register of the recipient of the short message.

Disadvantageous of this known method is that each SMS group needs to have its own service ID or, in other words, each SMS group needs its own server node address (telephone number) which can be used by only one SMS group.

### Summary of the Invention

The present invention aims to provide a solution for the mentioned drawbacks of the known methods or systems.
In the method for transmitting messages from individual user terminals to groups of user terminals via a transmission network under control of a message server, each terminal having a network address, the message server may comprise various network ports, the number of which, however, may be substantially less than the number of SMS groups. Besides, user groups may be formed by terminal users in a very convenient way, without any adaptation of any hardware or software in either the terminals or the message server.

The method comprises next steps for registering terminal or user groups. per group of terminals or terminal users a group identifier is registered, e.g. in a group register within the message server.
To register or to be registered to a group, a link is assigned to the relevant group identifier, comprising the relevant terminal's network address, and a selected one of the server's network ports. That server port is selected thus that the combination of the terminal's network address and the server's network port is not registered before in combination with another, previously registered group identifier. So the contents of the link <terminal network address - server network port> has to be unique, which enables it to be used as a group address for each participating user. The participating terminal, thus registered to the group, receives the network address of the selected port of the message server, to be used for future transmission of messages to terminals of the relevant group of terminals via the message server.

After a terminal is thus registered to a certain group, for transmitting a message from the terminal to terminals registered for the same group of terminals the terminal calls the network address of the selected port of the message server and transmits its message. The terminal's own network address is transmitted to the selected port by the transmission network (by means of "Calling Line Identification" CLI) or, if network CLI is disabled, by the terminal itself.
After reception of the message (and the terminal's own telephone number e.g. via CLI) the message server matches the combination of the server port called by the terminal and the calling terminal's network address with previously registered <server port - terminal address> combinations. If the <server port - terminal address> combination of the calling terminal matches with one of the registered <server port - terminal address> combinations the valid terminal group identifier will be found. The message server reads the network addresses of all terminals belonging to the found terminal group and transmits copies of the message received from the calling terminal, to the network addresses of the remaining group member terminals.

As SMS via (mobile) telephony is a very popular medium, preferrably, the messages have one kind of SMS-format, the terminals being SMS enabled terminals and the message server being connected, via said network ports, with an SMS enabled transmission network, e.g. mobile or fixed telephony network.

Instead of a distinct group identifier, the group identifier may be formed by a (unique) combination of the network address of one terminal, e.g. the terminal of the "founder" of a (new) SMSgroup, and one network port of the message server. The user of that terminal, being the group's "founder", preferrably may act as group "administator", having administrator accession rights to the relevant part of the group register. The term "administator" refers to computer networking practices, where administrator (accession) rights are assigned to a network administrator, who has the rights e.g. to modify rights of "normal" users, to add or delete users etc. In the same meaning the SMS group founder preferrably has the rights to add or delete SMS group users.

The network server may not only be connectable via the telephony network, but also via an IP network (internet) to which data terminals (PS etc.) are connected. In that case, the user acting as the group administrator preferrably has administrator accession rights to the group register via the IP network. In that way management of the relevant SMS group is more convenient than via an SMS enabled telephone keyboard.

### Brief Description of the Drawings

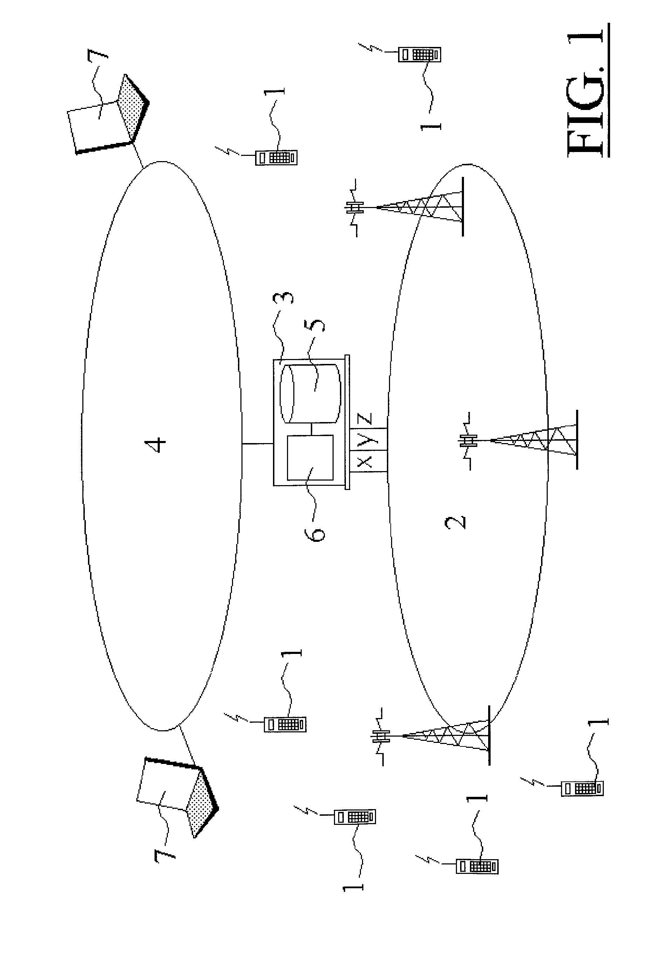

Figure 1 shows schematicly an embodiment of a system enbaled to execute the method according the invention.

### Detailed Description of the Drawings

Figure 1 shows a system for transmitting messages from individual user terminals 1 to groups of user terminals via a (telephony) transmission network 2, under control of a message server 3. Each terminal 1 has a network address, e.g. 31611111111, 31622222222, 31633333333, etc. while the message server 3 comprises various network ports, e.g. x,y,z, which are accessable by the terminals. The message server 3, moreover, comprises a group register 5 for registering, under control of a server processor 6, for each group of terminals a group identifier (ID) and for generating and registering per terminal assigned to a group, a link to the group ID, comprising the terminal's network address and one of the server's network ports. The network port has to chosen, by the server processor 6, so that the combination of the terminal's network address and the server's network port is not already registered for another group identifier; in other words, each link has to be made unique by chosing the right network port (e.g. x, y or z). For instance, a user group I has the follwing members:

| Group ID | Member | Term. address | Server port |
|---|---|---|---|
| I | A | 31611111111 | x |
| I | B | 31622222222 | x |
| I | C | 31633333333 | x |
| I | D | 31644444444 | x |
| I | P | 31655555555 | x |
| I | Q | 31666666666 | x |
| I | R | 31677777777 | x |

In this example, each link, consisting of the terminal network address (its telephone number) and the server port, is unique. Expanding the example with a second user group, may present the following:

| Group ID | Member | Term. address | Server port |
|---|---|---|---|
| II | D | 31611111111 | y |
| II | E | 31622222222 | x |
| II | F | 31633333333 | x |
| II | P | 31655555555 | y |
| II | Q | 31666666666 | y |

As group members (terminals or users) A, P and Q were already members of I, to generate a unique link <terminal address - server port> the processor 6 now selects port y instead of port x. In other words, the membership of e.g. terminal P of group I is characterised by the (unique) link <(telephone number) 31655555555 - (server port) x >, while for SMS group II the link becomes <telephone number 31655555555 - server port y >. In the same way, terminal P 's membership of group I is characterised by the link <31655555555 - x> and its membership of group II by <31655555555 - y>.
In the same way several groups can be registered, in group register 5, under control of processor 6:

| Group ID | Member | Term. address | Server port |
|---|---|---|---|
| I | A | 31611111111 | x |
| I | B | 31622222222 | x |
| I | C | 31633333333 | x |
| I | D | 31644444444 | x |

| | | | |
|---|---|---|---|
| I | P | 31655555555 | x |
| I | Q | 31666666666 | x |
| I | R | 31677777777 | x |

| | | | |
|---|---|---|---|
| II | D | 31611111111 | y |
| II | E | 31622222222 | x |
| II | F | 31633333333 | x |
| II | P | 31655555555 | y |
| II | Q | 31666666666 | y |

| | | | |
|---|---|---|---|
| III | A | 31611111111 | y |
| III | B | 31622222222 | y |
| III | D | 31644444444 | z |
| III | Q | 31666666666 | z |
| III | R | 31677777777 | y |

| | | | |
|---|---|---|---|
| IV | E | 31622222222 | Y |
| IV | F | 31633333333 | Y |
| IV | G | 31688888888 | x |
| IV | P | 31655555555 | z |
| IV | R | 31677777777 | z |

From the above, it appears that the various terminals are registered to different groups, alway using their own telephone number and one of only three (in this example) server ports. and thus only three server telephone connections to the network 2. Sorted to terminal/member:

| | | | |
|---|---|---|---|
| I | A | 31611111111 | x |
| III | A | 31611111111 | y |

| | | | |
|---|---|---|---|
| I | B | 31622222222 | x |
| III | B | 31622222222 | y |

| | | | |
|---|---|---|---|
| I | D | 31644444444 | x |
| II | D | 31611111111 | y |
| III | D | 31644444444 | z |

| | | | |
|---|---|---|---|
| II | E | 31622222222 | x |
| IV | E | 31622222222 | Y |

| | | | |
|---|---|---|---|
| II | F | 31633333333 | x |
| IV | F | 31633333333 | Y |

| | | | |
|---|---|---|---|
| I | P | 31655555555 | x |
| II | P | 31655555555 | y |
| IV | P | 31655555555 | z |

| | | | |
|---|---|---|---|
| I | Q | 31666666666 | x |
| II | Q | 31666666666 | y |
| III | Q | 31666666666 | z |

| | | | |
|---|---|---|---|
| I | R | 31677777777 | x |
| III | R | 31677777777 | y |
| IV | R | 31677777777 | z |

By always selecting a server port which forms, together with the relevant terminal's telephone number, a unique link, many SMS user groups can be formed, only using few server ports.

The server processor 3 transmits to the terminal 1 registered to said group or terminals (I...IV) the network address of the selected port (x,y,z) of the message server, to be used for future transmission of messages to terminals of the relevant group of terminals.

The server processor 6, moreover, comprises means for receiving a message from a calling terminal and for receiving the calling terminal's own network address, by means of CLI, e.g. calling telephone number 31655555555. The server processor 6 also comprises means for matching the combination of the server port, e.g. y, called by the terminal and the calling terminal's network address, e.g. 31655555555, with the <terminal address - server port> combinations, registered in the group register. The matchin process will result in one valid terminal group: < 31655555555 - y > will result in, see above, identifying SMS group II, where the calling terminal previously was registered as member P, with unique link <31655555555 - y>.
Next, the server processor, reads, from the group register 5, the network addresses of the remaining terminals belonging to the found terminal group and transmits copies of the message received from terminal 31655555555 (member P) to the network addresses of the remaining terminals of SMS group II, viz. to the telephone numbers:

| | | | |
|---|---|---|---|
| II | D | 31611111111 | y |
| II | E | 31622222222 | x |
| II | F | 31633333333 | x |
| II | P | 31655555555 | y |
| II | Q | 31666666666 | y |

The server processor 6 may assign the network address of each first registered terminal per group of terminals as identifier for a group administator, having administrator rights to the relevant part of the group register. Those administrator right may comprise addition of deletion of new members etc. In a preferred option, the "founder"/"administrator" of a new SMS group may invite a number of terminal users to join his/her SMS group. The invited users may register themselves via their mobile telephone. The server processor 3 makes for each groups member a unique record in the group register, using the new member's teminal telepohne number and -to be selected by the the server processor- one of the server port x, y, or z. Each terminal user cannot be registered to more than the number of ports, in this example three.

Preferrably, the founder/administrator is enabled allowed to manage his/her SMS group(s) via the internet 4, by means of his/her PC or data terminal 7.

## Claims

1. Method for transmitting messages from individual user terminals (1) to groups of user terminals via a transmission network (2) under control of a message server (3), each terminal having a network address and the message server comprising various network ports (x,y,z) which are accessable by the terminals, the method comprising next steps for registering the relevant groups of terminals:
• a group identifier is registered per group of terminals;
• to register a terminal to one group of terminals, a link is registered, comprising the terminal's network address and a selected one of the server's network ports, which port is selected thus that the combination of the terminal's network address and the server's network port is not registered before in combination with another group identifier;
• the terminal registered to said group of terminals, receives the network address of the selected port of the message server, to be used for future transmission of messages to terminals of the relevant group of terminals via the message server;
• the method comprising next steps for transmitting a message from the terminal to terminals registered for the same group of terminals:
• the terminal calls the network address of the selected port of the message server and transmits its message, the calling terminal's own network address being transmitted to the selected port by or via the transmission network;
• the message server matches the combination of the server port called by the terminal and the calling terminal's network address with the registered server port - terminal address combinations, resulting in finding the valid terminal group;
• the message server reads the network addresses of the terminals belonging to the found terminal group and transmits copies of the received message to those network addresses.

2. Method according to claim 1, said messages having an SMS-format, the terminals being SMS enabled terminals and the message server being connected, via said network ports, with an SMS enabled transmission network (2).

3. Method according to claim 2, said network being a mobile telecommunications network.

4. Method according to claim 1, said group identifier being a unique combination of the network address of one terminal and one network port of the message server.

5. Method according to claim 4, the terminal of which the network address is included in the group identifier being the terminal of a user acting as a group administator, having administrator accession rights to the relevant part of the group register.

6. Method according to claim 2, the network server also being connected to an IP network (4), to which data terminals are connected.

7. Method according to claim 5 and 6, the user acting as the group administrator has administrator accession rights to the group register via the IP network.

8. System for transmitting messages from individual user terminals (1) to groups of user terminals via a transmission network (2) under control of a message server (3), each terminal having a network address and the message server having various network ports (x,y,z) which are accessable by the terminals, the message server, moreover, comprising a group register (5) for registering, under control of a server processor (6), for each group of terminals a group identifier and for registering for each terminal assigned to a group of terminals, a link to the relevant group identifier, comprising the terminal's network address and one of the server's network ports to be selected, by the server processor, in such way that the combination of the terminal's network address and the server's network port is not already registered before in combination with another group identifier, the server processor transmitting to the terminal registered to said group or terminals the network address of the selected port of the message server, to be used for future transmission of messages to terminals of the relevant group of terminals; the server processor, moreover, comprising means for receiving a message from a calling terminal and for receiving the calling terminal's own network address, as well as means for matching the combination of the server port called by the terminal and the calling terminal's network address, with the server port - terminal address combinations registered in the group register, resulting in one valid terminal group; the server processor, moreover, comprising means for reading, from the group register, the network addresses of the terminals belonging to the found terminal group and for transmitting copies of the received message to those network addresses.

9. System according to claim 1, the server processor (3) assigning the network address of each first registered terminal per group of terminals as identifier for a group administator, having administrator rights to the relevant part of the group register.
